Europäisches Patentamt

European Patent Office

Office européen des brevets

(11) Numéro de publication: **0 091 841**
**B1**

(12) **FASCICULE DE BREVET EUROPEEN**

(45) Date de publication du fascicule du brevet:
23.04.86

(21) Numéro de dépôt: **83400474.9**

(22) Date de dépôt: **08.03.83**

(51) Int. Cl.⁴: **F 02 K 9/97**

(54) **Dispositif déployable de prolongement de tuyère de moteur fusée.**

(30) Priorité: **17.03.82 FR 8204508**

(43) Date de publication de la demande:
**19.10.83 Bulletin 83/42**

(45) Mention de la délivrance du brevet:
**23.04.86 Bulletin 86/17**

(84) Etats contractants désignés:
**BE CH DE FR GB IT LI LU NL**

(56) Documents cités:
**FR - A - 1 414 824
FR - A - 1 419 313
US - A - 2 569 996
US - A - 3 249 306
US - A - 3 482 783
US - A - 3 596 465**

**JOURNAL OF SPACECRAFT AND ROCKETS, vol. 9, no. 7, juillet 1972, pages 485-486, New York, USA**

(73) Titulaire: **CENTRE NATIONAL D'ETUDES SPATIALES, 2, Place Maurice Quentin, F-75001 Paris (FR)**

(72) Inventeur: **Gauge, Paul Denis, 10, Rue de Nangis, F-77240 Cesson (FR)**

(74) Mandataire: **de Boisse, Louis, CABINET DE BOISSE 37, Avenue Franklin D. Roosevelt, F-75008 Paris (FR)**

## Description

L'invention concerne un dispositif déployable de prolongement de tuyère de moteur fusée équipant entre autres les étages intermédiaires d'un lanceur.

L'impulsion spécifique de propulsion (ISP) d'un moteur fusée dans le vide est fonction du rapport d'expansion de sa tuyère, c'est-à-dire du rapport des surfaces de la section de sortie à la section au col. Donc, toutes choses égales par ailleurs, l'ISP augmente avec le rapport d'expansion.

Comme la forme de la tuyère est imposée par des considérations d'ordre aérodynamique et ne varie que très peu, l'ISP augmente avec la longueur de la tuyère. Tout gain d'ISP se traduit par un gain en masse au niveau de la charge utile.

Dans la réalité, il faut trouver un compromis entre la section de sortie, que l'on souhaite la plus grande possible, et les augmentations de masse corrélatives qui viennent en dédection des gains possibles au niveau de la charge utile, ces augmentations de masse étant dues à l'augmentation de longueur du divergent et des structures enveloppes entre les étages d'un lanceur.

Afin de limiter la hauteur nécessaire au logement du moteur entre étages d'un lanceur, on s'est orienté vers des dispositifs susceptibles de réaliser le rapport d'expansion souhaité après séparation de l'étage inférieur, par déplacement d'un ou plusieurs anneaux tronconiques ou mise en place de parois fractionnées autour de la tuyère. Ces systèmes sont généralement commandés par l'intermédiaire de sources de puissance annexes: électrique, hydraulique ou autres.

Selon une réalisation décrite dans le Journal of Spacecraft, Vol. 9, n° 7, juillet 1972, pages 485, 486, le prolongement est constitué d'une feuille métallique repliée en V, fixée extérieurement à la tuyère par l'extrémité d'une branche du V, l'ouverture du V étant dirigée dans le sens de l'ouverture de la tuyère. Un couvercle, en tissu de nylon enduit de caoutchouc, est fixé sur le pourtour formé par la deuxième branche du V. Le prolongement est déployé, après séparation de l'étage inférieur, par mise sous pression (de l'ordre de 0,1 MPa) de la tuyère. Le couvercle est separé en coupant par explosif la bague ou le câble de fixation. La déformation plastique résultante produit une structure finale rigide qui ne nécessite pas de supports supplémentaires pour supporter la poussée et les charges dynamiques.

Le prolongement ne peut être refroidi que par rayonnement lorsque la tuyère est en fonctionnement et ceci détermine une qualité de matériau compatible avec la température du jet, température d'autant plus élevée que la partie fixe de tuyère sera plus courte. Le repliage du prolongement sur la tuyère fixe nécessite que celle-ci ne supporte aucune tuyère secondaire et, par conséquent, le dispositif ne peut être utilisé dans le cas de tuyère à flux dérivé.

Le brevet US-A-3 482 783 décrit une jupe de tuyère déployable. La jupe est formée d'une structure gonflable, en tissu, à double paroi. Les parois sont maintenues entre elles par des entretoises en fil. Les faces de la structure sont imprégnées d'un produit imperméable. Une couche d'un élastomère synthétique est appliquée sur la surface intérieure de la jupe pour la protéger des gaz à haute température. Avant son déploiement, la jupe, pliée en accordéon, est stockée autour de la base de la jupe principale du moteur. La jupe est déployée par une partie du fluide de refroidissement normalement prévu pour la jupe principale de tuyère.

Dans l'état actuel de la technique les produits susceptibles de protéger la structure de tissu ou de la rendre imperméable tout en conservant la souplesse nécessaire au pliage, résistent mal à la température das gaz éjectés et le temps de tenue de la jupe est aléatoire.

Le dispositif déployable de prolongement de tuyère, selon l'invention, est disposé à l'extrémité de la tuyère fixe et peut éventuellement être refroidi par le fluide de refroidissement circulant dans la jupe de la tuyère.

Les explications et figures données ci-après à titre d'exemple permettront de comprendre comment l'invention peut être réalisée.

La fig. 1 montre une vue partiellement en coupe d'une tuyère équipée d'un dispositif selon l'invention, en position repliée.

La fig. 2 est une même vue que la fig. 1, le dispositif étant en position dépliée.

La fig. 3 est une vue à plus grande échelle du détail III de la fig. 1.

La fig. 4 est une vue à plus grande échelle du détail IV de la fig. 2.

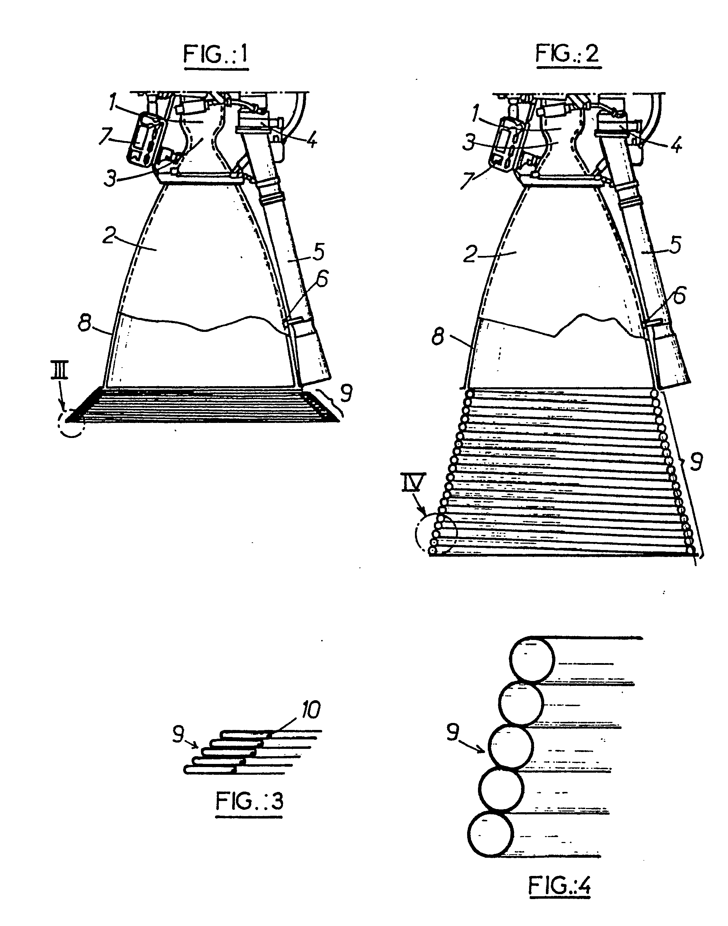

Les figures 1 et 2 montrent un moteur fusée à flux dérivé. La chambre de combustion 1 communique avec la tuyère principale 2 par un étranglement ou col 3. La sortie de la turbopompe 4 est prolongée par une tuyère 5 qui est fixée au moins en un point 6 de la tuyère principale. Un dispositif de refroidissement 7 de la chambre de combustion 1 et de la jupe 8 de la tuyère principale est prévu près de col du moteur. Le dispositif de prolongement 9 de la tuyère principale 2, selon l'invention, se présente extérieurement sous l'aspect d'une jupe tronconique formée d'un empilement d'anneaux ou de spires de tube soudés entre eux approximativement selon une de leur génératrices. Le tube présente, lorsque le dispositif est en position repliée (fig. 1), une section aplatie dans le sens de l'empilement, la forme étant, par exemple, celle d'une ellipse ou, comme représenté fig. 3, d'un rectangle allongé dont les petites côtés sont arrondis.

Le ou les tubes comportent à l'intérieur un dispositif pyrotechnique, par exemple un cordeau détonant 10, relié à un dispositif d'allumage commandé par la séparation d'étage. La mise à feu du cordeau provoque, par la formation de gaz, une augmentation de pression suffisante dans le tube pour qu'il se gonfle et prenne une forme approximativement circulaire comme montré fig. 4. Par suite de la modification de forme des tubes constituant les spires ou les anneaux, et en particulier de leur augmentation de dimension dans le sens de l'empilement, le prolongement se déploie, comme montré fig. 2, et la surface des tubes formant l'intérieur continue la paroi intérieure de la tuyère.

Suivant une première forme de réalisation, le prolongement est formé à partir d'un tube continu enroulé hélicoïdalement à spires jointives, les spires étant soudées les unes aux autres selon deux génératrices approximativement diamétralement opposées. Le cordon détonant est placé dans le tube et sur toute sa longueur et ne comporte généralement qu'un point d'allumage.

Suivant une deuxième forme de réalisation, le prolongement est formé à partir de plusieurs tubes, disposée côte à côte et enroulés à spires jointives selon des spirales plus ou moins serrées. Chaque tube est alors muni d'un cordon détonant, tous les cordons étant reliés au même dispositif d'allumage.

Dans les réalisations précédentes, on peut, une fois le prolongement déployé, soit maintenir le ou les tubes sous pression, le refroidissement s'effectuant par rayonnement, soit prévoir un raccordement avec la sortie du refroidissement de la jupe fixe de la tuyère, le refroidissement s'effectuant par circulation de fluide cryogénique. Le raccordement entre le prolongement et la jupe fixe et eventuellement avec l'atmosphère extérieure, avant et pendant le dépliage, est interrompu par des dispositifs d'arrêt: vannes ou clapets.

Selon une troisième forme de réalisation, le prolongement est constitué d'un empilement d'anneaux munis chacun d'un cordon détonant. Ces cordons sont reliés de manière connue à un dispositif d'allumage. Cette réalisation se prête uniquement à un refroidissement par rayonnement.

Différents modes de réalisation sont susceptibles de fournir un dispositif de prolongement selon l'invention.

On enroule à spires jointives un tube de section circulaire sur un mandrin et on soude les spires les unes aux autres. On place le cordon détonant et on met sous pression le tube. On procède ensuite, selon des méthodes connues, à l'écrasement de l'ensemble de manière à réduire, dans le rapport voulu, la hauteur du prolongement. On fixe ensuite le dispositif à la jupe de tuyère.

Le même mode de réalisation s'applique à un empilement d'anneaux.

Selon un autre mode, on part du tube de section aplatie que l'on enroule et soude. L'opération d'écrasement est alors supprimée.

Selon un exemple de réalisation, on utilise un tube d'acier inoxydable de section circulaire, de 10 mm de diamètre et de 0,1 mm d'épaisseur. Par écrasement de l'ensemble, on fait passer l'épaisseur d'une spirale de 10 mm à 2 mm environ, de cette façon la longueur totale du dispositif de prolongement passe de 800 mm à 160 mm, soit un rapport 1/5.

Le dispositif est alors fixé sur le pourtour de la jupe fixe de la tuyère, les sorties de refroidissement étant éventuellement raccordées. On place sur le bord inférieur de la jupe tronconique du dispositif des moyens de maintien largables destinés à éviter tout déplacement dû aux vibrations pendant la phase de lancement. Ces moyens sont largués lors de la séparation de l'étage inférieur. Le dispositif pyrotechnique, mis à feu, crée une pression suffisante pour amener les tubes à leurs forme circulaire et ainsi déployer le dispositif.

L'allongement de la tuyère permet de porter la section de passage de 60 à 130, ce qui, malgré l'augmentation de masse du moteur de l'ordre de 15 kg, permet une augmentation significative de la charge utile.

## Revendications

1. Dispositif déployable de prolongement de tuyère de moteur fusée destiné en particulier à équiper les étages intermédiaires d'un lanceur, le dispositif étant fixé extérieurement à la tuyère par une de ses extrémités, des moyens susceptibles de produire une pression suffisante sont prévus pour produire le déploiement du dispositif dans le sens de l'axe de la tuyère, caractérisé en ce qu'il est constitué d'une jupe tronconique (9) formée d'un empilement d'anneaux ou de spires de tube soudés entre eux, lesdits anneaux ou spires de tube présentant une section aplatie dont la plus grande dimension est perpendiculaire à l'axe de la tuyère, et d'un dispositif pyrotechnique (10), logé dans le tube, susceptible de produire, lors de sa mise à feu, une pression suffisante pour faire augmenter la dimension du tube dans le sens de l'empilement.

2. Dispositif selon la revendication 1, caractérisé en ce que la jupe est formée par au moins un tube continu enroulé hélicoïdalement à spires jointives, les spires étant soudées les unes aux autres selon deux génératrices approximativement diamétralement opposées.

3. Dispositif selon la revendication 1 ou 2, caractérisé en ce que le tube a une section de forme elliptique.

4. Dispositif selon la revendication 1 ou 2, caractérisé en ce que le tube a une section en forme de rectangle allongé dont les petits côtés sont arrondis.

5. Dispositif selon l'une des revendications 2 à 4, caractérisé en ce que le ou les tubes formant la jupe tronconique comportent au moins un raccordement avec la sortie de refroidissement de la tuyère fixe.

6. Dispositif selon la revendication 5, caractérisé en ce que le ou les raccordements comportent un dispositif d'arrêt isolant le ou les tubes au moins pendant la mise à feu du dispositif pyrotechnique.

## Patentansprüche

1. Faltbare Verlängerungsvorrichtung für die Düse eines Raketenmotors, insbesondere für die Ausrüstung der Zwischenstufen einer mehrstufigen Rakete, welche Vorrichtung mit einem ihrer Enden aussen an der Düse befestigt ist, die Mittel zur Erzeugung eines Druckes aufweist, der ausreicht, um die Entfaltung der Vorrichtung in Richtung der Düsenachse zu erzeugen, dadurch gekennzeichnet, dass sie als kegelstumpfförmige Schürze (9) ausgebildet ist, die aus einem Stapel aus durch Rohre gebildeten Ringen oder Schraubenwindungen besteht, die miteinander verschweisst sind, wobei die Rohre der Ringe oder Schraubenwindungen einen abgeflachten Querschnitt haben, dessen grösste Abmessung sich senkrecht zur Düsenachse erstreckt uns dass innerhalb des Rohres eine pyrotechnische Einrichtung (10) vorgesehen ist, die nach ihrer Zündung einen Druck erzeugen kann, der ausreicht, um die Abmessung des Rohres in Richtung der Stapelhöhe zu vergrössern.

2. Vorrichtung nach Anspruch 1, dadurch gekennzeichnet, dass die Schürze durch mindestens ein zusammenhängendes Rohr gebildet ist, das schraubenförmig mit aneinanderliegenden Windungen gerollt ist, wobei die Windungen längs zwei Mantellinien miteinander verschweisst sind, die einander etwa diametral gegenüberliegen.

3. Vorrichtung nach Anspruch 1 oder 2, dadurch gekennzeichnet, dass das Rohr einen Querschnitt von elliptischer Form aufweist.

4. Vorrichtung nach Anspruch 1 oder 2, dadurch gekennzeichnet, dass das Rohr einen Querschnitt in Form eines länglichen Rechteckes aufweist, dessen kurze Seiten abgerundet sind.

5. Vorrichtung nach einem der Ansprüche 2 bis 4, dadurch gekennzeichnet, dass das oder die Rohre, die die kegelstumpfförmige Schürze bilden, wenigstens einen Anschluss zum Kühlmittelaustritt der fest angeordneten Düse aufweisen.

6. Vorrichtung nach Anspruch 5, dadurch gekennzeichnet, dass der oder die Anschlüsse eine Absperreinrichtung aufweisen, die das oder die Rohre wenigstens während des Zündens der pyrotechnischen Einrichtung isolieren.

**Claims**

1. An unfoldable device for extending the nozzle of a rocket engine, intended especially for equipping the intermediate stages of a launcher, the device being fixed by one of its ends externally to the nozzle, means capable of producing a sufficient pressure being provided for obtaining unfolding of the device in the direction of the axis of the nozzle, wherein said device consists of a frustoconical skirt formed by a stack of tube rings or coils welded to one another, said tube rings or coils having a flattened cross-section with its longest dimension being perpendicular to the nozzle axis, and of a pyrotechnic device accomodated in the tube and capable of generating, when ignited, sufficient pressure to increase the dimension of the tube in the direction of the stack.

2. The device as claimed in claim 1, wherein the skirt is formed by at least one continuous tube wound helically in adjoining coils, the coils being welded to one another along two approximately diametrically opposite generating lines.

3. The device as claimed in claim 1 or 2, wherein the tube has a cross-section of elliptical shape.

4. The device as claimed in claim 1 or 2, wherein the tube has a cross-section in the form of an elongated rectangle, the short sides of which being rounded.

5. The device as claimed in any one of the claims 2 through 4, wherein the tube or forming the frustoconical skirt incorporate at least one connection to the cooling outlet of the fixed nozzle.

6. The device as claimed in claim 5, wherein the connection(s) incorporates a shut-off device which isolates the tube(s) at least during ignition of the pyrotechnic device.

FIG.:1

FIG.:2

FIG.:3

FIG.:4